# EUROPEAN PATENT SPECIFICATION

(11) **EP 3 915 837 B1**
(45) Date of publication and mention of the grant of the patent: **12.07.2023**
(21) Application number: 20465526.0
(22) Date of filing: 26.05.2020
(51) Int. Cl.: B60R 1/00, G06F 3/01

(54) **METHOD FOR ADAPTING A DISPLAYED VIEW OF A DIGITAL MIRROR SYSTEM OF A VEHICLE AND DIGITAL MIRROR SYSTEM OF A VEHICLE**
VERFAHREN ZUR ANPASSUNG EINER ANGEZEIGTEN ANSICHT EINES DIGITALEN SPIEGELSYSTEMS EINES FAHRZEUGS UND DIGITALES SPIEGELSYSTEM EINES FAHRZEUGS
PROCÉDÉ POUR ADAPTER UNE VUE AFFICHÉE D'UN SYSTÈME DE MIROIR NUMÉRIQUE D'UN VÉHICULE ET SYSTÈME DE MIROIR NUMÉRIQUE D'UN VÉHICULE

(43) Date of publication of application: 01.12.2021
(73) Proprietor: Continental Automotive Technologies GmbH, 30165 Hannover (DE)
(72) Inventor: Pop, Sebastian, 81737 Munich (DE)
(74) Representative: Continental Corporation

(56) References cited:
- EP-A1- 2 914 002
- EP-A2- 2 743 133
- JP-A- 2009 073 250
- US-A1- 2016 297 362
- US-A1- 2019 197 327

## Description

The invention relates to a method for adapting a displayed view of a digital mirror system of a vehicle and a digital mirror system of a vehicle.

Digital mirror systems are often used to replace outdoor mirrors, for example on commercial vehicles like trucks or buses, in order to improve the aerodynamic track of a vehicle. In most cases the outdoor mirrors - usually having a high aerodynamic track - are replaced by only small cameras capturing a video feed from the outside of the vehicles, and displays are placed inside the driver's cab where an image content of the captured video feed is shown to the driver.

Due to the smaller dimensions of the cameras compared to classical mirrors the aerodynamic track of a digital mirror system is a major improvement no matter if it is used for trucks, other commercial vehicles or vehicles like passenger cars.

Digital mirror systems display the image content of the video feed captured by the outdoor camera, wherein the image content usually is fixed. Different to this, when using classical mirrors, a driver is able to amend the view by moving his head and/or eyes in different directions when looking into the mirror. He is then able to adapt the portion of the vehicle's surrounding shown in the mirror. This possibility enables the driver to find certain areas outside the vehicle and focus on them. As classical digital mirror systems usually provide the fixed image content, this possibility is not given. Document US 2019197327 discloses a method for adapting a displayed view of a digital mirror system according to the preamble of claim 1.

Object is of the invention is to improve a digital mirror system such that a displayed view in a display can be adapted to the driver's viewing needs.

This object is attained by a method with the feature combination of claim 1.

A corresponding digital mirror system of a vehicle, which is in particular designed to execute the above-indicated method, is the subject-matter of claim 10.

Advantageous embodiments are subject-matter of the dependent claims.

A method for adapting a displayed view of a digital mirror system of a vehicle comprises the following steps:
- providing a vehicle with a digital mirror system, the digital mirror system comprising at least one camera to capture a video feed from outside the vehicle, the video feed being composed by a sequence of images comprising an image content, and at least one display displaying at least a portion of the image content of each image in the video feed, the display comprising an upper border, a lower border and two opposite lateral borders;
- providing the vehicle with an eye tracking unit to track a viewing direction of a driver's eyes;
- capturing the video feed and displaying one portion of the video feed's image content on the display;
- identifying a change of the viewing direction of the driver's eyes;
- shifting the portion of the video feed's image content according to the driver's eyes' changed viewing direction, wherein the portion of the video feed's image content is only shifted if the viewing direction points towards a block at the display's borders for a predefined time span.

The above-described method bridges the gap between a digital mirror system and classical mirrors when enabling the digital mirror system to react to a driver's movement in the manner a classical mirror would do. With the above-described method the display of the digital mirror system does not longer display a fixed image content of a video feed regardless the angle in which the driver is approaching the display but provides a possibility to adapt the displayed view to the viewing needs of the driver. The driver is able to find different areas outside the vehicle on the display and to focus on them without taking the hands off the steering wheel. When the portion of the displayed video feed's image content is shifted according to the viewing angle of the driver all advantages of a classical mirror can be attained. The eye tracking unit provided in the vehicle identifies that the driver's eyes are moving, hence changing their viewing direction. Based on this information the digital mirror system can react and shift the portion of the displayed video feed's image content to another portion of the video feed's image content.

For example, the video feed is composed by a sequence of high-resolution images, wherein each high-resolution image is fragmented into a plurality of blocks, wherein the displayed portion of the video feed's image content is composed by at least two adjacent two blocks.

For example, shifting the portion of the video feed's image content is performed by at least one block located on the display leaving the display at a first of the display's borders and, at the same time, at least one block located outside of the display entering the display at a second of the display's borders.

In one example the display comprises four borders wherein the borders are perpendicular to each other. Further, the upper border is located opposite to the lower border and the lateral borders are located opposite to each other.

When the video feed's image content is shifted to a different portion a plurality of blocks being located outside the display and being located directly adjacent to blocks already shown in the display are shifted onto the display. At the same time, on the opposite border, the borderline blocks which were shown on the display shift to the outside of the display thereby leaving the display. The blocks located between the block entering the display and the block leaving the display are also shifted in the same direction as the leaving and the entering block.

In this way, the portion of the video feed's image content which is shown on the display can be amended and therefore adapted to the driver's needs.

In one example the eye tracking unit is provided by an interior camera, in particular an interior camera being placed inside the vehicle.

In one implementation, the portion of the video feed's image content is only shifted if the viewing direction of the driver's eyes points towards the display.

The digital mirror system will permanently analyze the video feed from the interior camera and detect the viewing direction (eye position) of the river. If a movement is detected and the eyes are pointing towards the display, then the digital mirror system will display the required portion of the video feed's image content on the display, given the impression and the usefulness of a classical real mirror.

For example, the portion of the video feed's image content is only shifted if the viewing direction of the driver's eyes points towards a block being located at one of the display's borders.

According to the invention, the portion of the video feed's image content is only shifted if the viewing direction points towards a block at the display's borders for a predefined time span.

With these two requirements, the digital mirror system can securely detect if the driver is really willing to change the portion of the video feed's image content on the display. As long as the driver's eyes are focusing the central area of the display it can be assumed that a shifting of the shown portion is not desired. The same holds for the case if the driver is only shortly pointing his eyes towards the border block.

Only if the driver points his eyes long enough onto a border area of the display it can be assumed that he is willing to change the portion of the video feed's image content on the display and therefore the display is accordingly adapted.

In one example, when shifting the portion of the video feed's image content, the block the driver's eyes are pointing towards is leaving the display.

In another example, when shifting the portion of the video feed's image content, the block the driver's eyes are pointing towards is shifting to a center of the display.

In one implementation, the captured video feed is compressed, wherein for displaying the at least one portion of the video feed's image content only the portion to be displayed is decompressed. By decompressing only the part of the video feed's image content which is in the end shown at the display it is possible to improve the processor performance of the digital mirror system as less data have to be processed compared to the case where all compressed data will be decompressed.

A digital mirror system of a vehicle, in particular a digital mirror system being designed to execute the above-described method, comprises at least one camera to capture a video feed from outside the vehicle, the video feed being composed by a sequence of images comprising an image content, and at least one display displaying at least a portion of the image content of each image in the video feed, the display comprising an upper border, a lower border and two opposite lateral borders. Further, the digital mirror system comprises a view adapting unit to adapt the portion of the video feed's image content displayed on the display, the view adapting unit comprising an eye tracking unit to track a viewing direction of the driver's eyes, an identifying unit to identify a change of the viewing direction of the driver's eyes and a shifting unit to shift the portion of the video feed's image content according to the driver's eyes' changed viewing direction, wherein the portion of the video feed's image content is only shifted if the viewing direction points towards a block at the display's borders for a predefined time span.

Examples of the invention are described in the following with reference to the accompanying drawings, wherein:
- Fig. 1: shows a perspective side view onto a truck comprising a digital mirror system;
- Fig. 2: shows a schematic inside view of the truck of fig. 1 comprising two displays of the digital mirror system to be monitored by a driver;
- Fig. 3: shows a schematic overview of the truck of fig. 1 with the digital mirror system;
- Fig. 4: shows a flow chart with steps of a method for adapting a displayed view of a digital mirror system;
- Fig. 5: shows a schematic overview of an image content of a video feed, wherein each image is divided into a plurality of blocks;
- Fig. 6a): shows schematically a first example to shift a portion of the video feed's image content of fig. 5;
- Fig. 6b): shows schematically a second example to shift a portion of the video feed's image content of fig. 5;
- Fig. 7a): shows schematically an example view direction of the driver's eyes of fig. 2;
- Fig. 7b): shows schematically a further example view direction of the driver's eyes of fig. 2; and
- Fig. 8: shows a further, more detailed flow chart with steps of the method for adapting the displayed view of the digital mirror system.

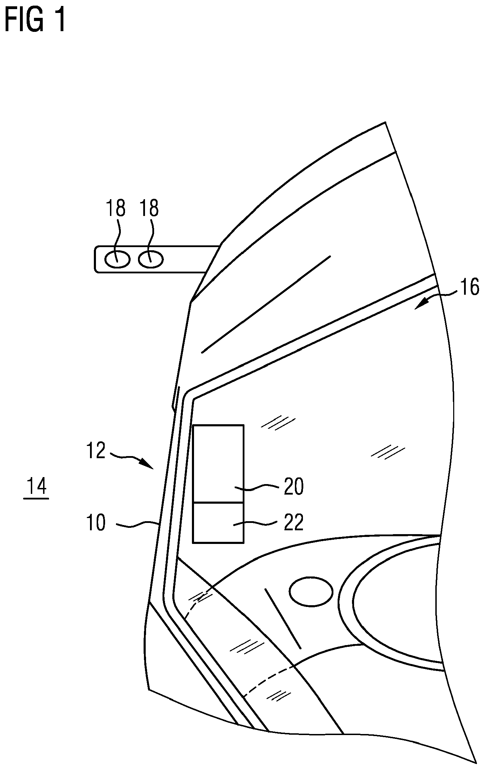

Fig. 1 shows a perspective side view onto a truck, in particular onto a driver cab 10 of a vehicle 12, from the outside 14 of the vehicle 12, the vehicle 12 comprising a digital mirror system 16.

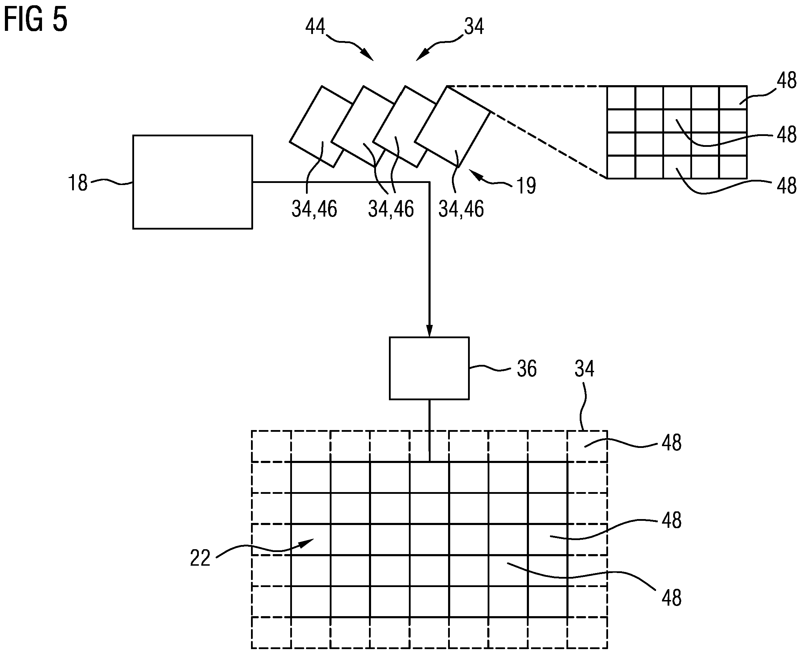

The digital mirror system 16 comprises a plurality of outside cameras 18 which are able to capture a video feed 19 (see fig. 5) from the outside 14 of the vehicle 12. Further, the digital mirror system 16 comprises a display 20 where at least a portion 22 of the captured video feed 19 from the cameras 18 is displayed.

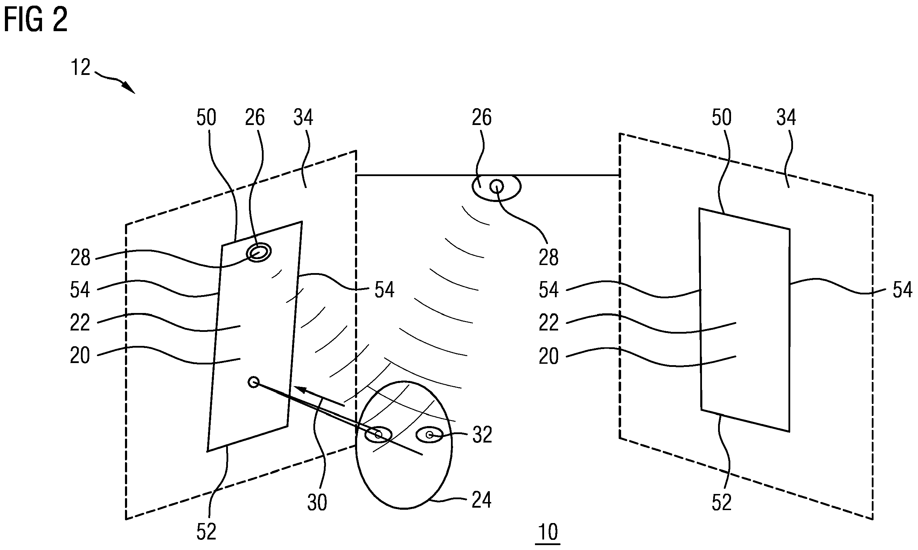

In fig. 2 a schematic inside view of the truck of fig. 1 is shown. It can be seen, that the vehicle 12 comprises two displays 20 each located sidewards to a driver 24 driving the vehicle 12. In the driver's cab 10 an eye tracking unit 26, in particular formed by two interior cameras 28, is located. With the eye tracking unit 26 a viewing direction 30 of the driver's 24 eyes 32 can be tracked.

As can be seen by the dotted lines surrounding the displays 20 an image content 34 of the outside cameras' 18 video feed 19 is larger than the displayed portion 22 of the image content 34.

Therefore, it is possible to shift the portion 22 of the video feed's 19 image content 34 to amend the displayed view on the displays 20 in order to meet the viewing needs of the driver 24.

This is possible by tracking the viewing direction 30 of the driver's 24 eyes 32 in order to determine which portion 22 of the image content 34 the driver 24 wants to see.

For example, if the driver 24 wants to focus on a certain area on the outside 14 which usually is reflected in a classical rear-view mirror, the driver 24 will instinctively move his eyes 32 at a certain angle and thus searching for a better view. Via the eye tracking unit 26 it is possible to track the viewing direction 30 of the driver's eyes 32 and display the portion 22 of the entire high-resolution image content 34, e. g. the captured video feed 19, that is most suitable based on the driver's 24 viewing direction 30.

The basic concept is to mimic the behavior of a classical rear-mirror with the digital mirror system 16 using eye and/or face tracking.

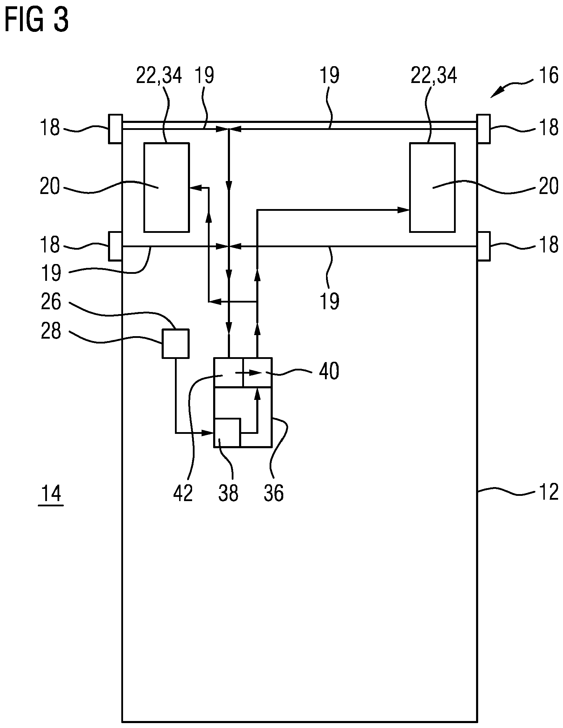

Fig. 3 shows a schematic overview of the truck of fig. 1 with the digital mirror system 16 being able to adapt the displayed view according to the needs of the driver 24.

On the outside 14 of the shown vehicle 12 the digital mirror system 16 comprises four outside cameras 18 which each capture a video feed 19 from the outside 14 of the vehicle 12 and send this video feed 19 to a view adapting unit 36 which is able to adapt the portion 22 of the video feed's 19 image content 34 which is displayed on the displays 20. Further, the eye tracking unit 26 sends a video feed from the interior cameras 28 to the view adapting unit 36. An identifying unit 38 in the view adapting unit 36 is able to identify based on the video feed from the interior cameras 28 if the viewing direction 30 of the driver's 24 eyes 32 has changed. If this is the case this information is sent to a shifting unit 40 which is able to give signals to the displays 20 in order to shift the portion 22 of the video feed's 19 image content 34 according to the driver's 24 eyes' 32 changed viewing direction 30. The video feed 19 from the outside cameras 18 is received by a receiver 42 in the view adapting unit 36 and then adapted to the driver's 24 needs based on the signals of the identifying unit 38 processed in the shifting unit 40. The shifting unit 40 gives signals to the displays 20 which portion 22 of the image content 34 shall be seen on the displays 20.

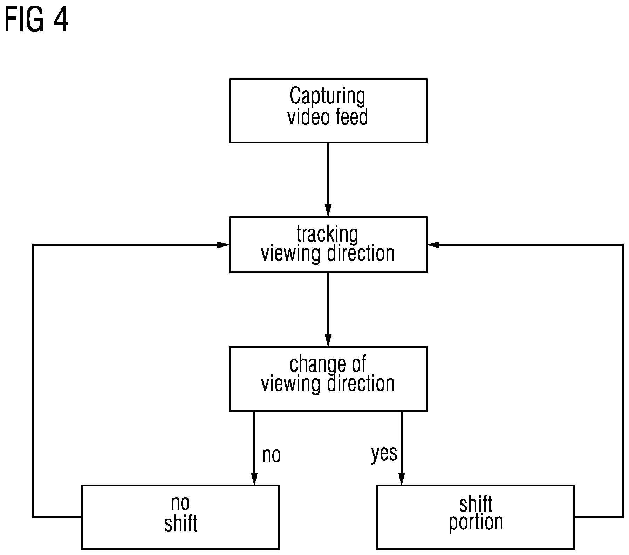

Fig. 4 shows a flow chart with steps of a method for adapting the displayed view of the digital mirror system 16 of the vehicle 12.

In the first step the video feed 19 of the outside cameras 18 is captured, wherein in the second step the viewing direction 30 of the driver's 24 eyes 32 are tracked by the eye tracking unit 26. Based on the tracked viewing direction 30 it is in a third step identified if the viewing direction 30 of the driver's 24 eyes 32 has changed. In case the viewing direction 30 has changed, the portion 22 of the video feed's 19 image content 34 is shifted according to the driver's 24 eyes' 32 changed viewing direction 30. In case, no change of the viewing direction 30 is identified, the video feed's 19 image content 34 stays fixed, and the respective portion 22 is not shifted. The method steps shown in fig. 4 are executed in a permanent manner.

Fig. 5 shows a schematic a schematic overview of the image content 34 of the video feed 19 captured by the outside cameras 18. As can be seen in fig. 5 the video feed 19 is composed by a sequence 44 of high-resolution images 46, wherein each image 46 comprises the image content 34.

When processing the video feed 19 from the outside cameras 18 each high-resolution image 46 is fragmented into a plurality of blocks 48 and in particular compressed in order to safe storage space. As can be further seen in fig. 5, the view adapting unit 36 selects the portion 22 of the video feed's 19 image content 34 which should be shown on the display 20. The rest of the image content 34 stays outside the display 20 and is not shown on the display 20. As can be further seen in fig. 5, the displayed portion 22 of the video feed's 19 image content 34 is composed by a plurality of adjacent blocks 48. Different to known digital mirror systems 16 the portion 22 is not fixed on the display 20 but can be shifted depending on the viewing direction 30 of the driver 24 having changed. In this case, image blocks 48 move from the outside of the display 20 onto the display 20 and vice versa.

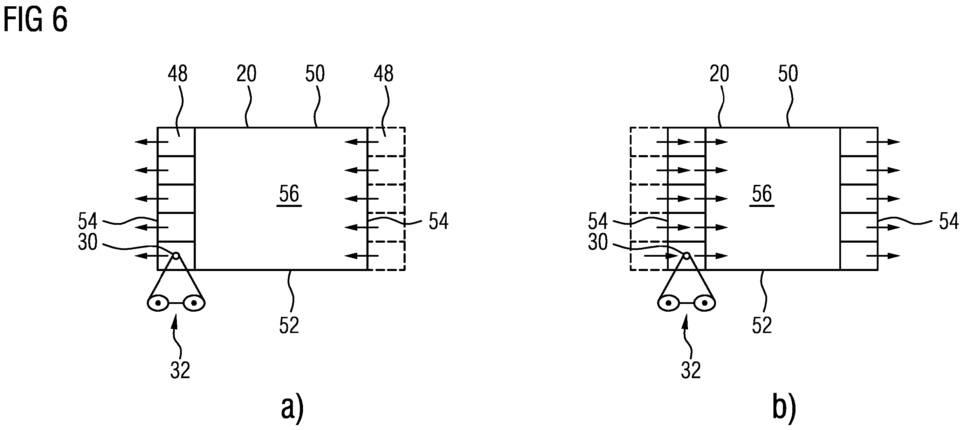

Fig. 6 shows in a) schematically a first example to shift the portion 22 of the video feed's 19 image content 34 and in b) a second example to shift the portion 22 of the video feed's 19 image content 34.

The display 20 comprises an upper border 50, a lower border 52 and two opposite lateral borders 54.

As can be seen in figs. 6a) and 6b), when shifting the portion 22 of the video feed's 19 image content 34 is performed, at least one block 48, in the shown cases a column of blocks 48, leaves the display 20, wherein at the same time, a column of blocks 48 being located on the opposite border 50, 52, 54 of the display 20, enters the display 20. The same number of blocks 48 that are leaving the display 20 at one border 50, 52, 54 enters the display 20 exactly on the opposite border 50, 52, 54 of the display 20.

Fig. 6 shows two possibilities of shifting the portion 22 of the video feed's 19 image content 34.

In the first example, shown in fig. 6a), the column of blocks 48 located at the lateral border 54 of the display 20, leaves the display 20, when the viewing direction 30 is pointed towards this column of blocks 48. In the second example, shown in fig. 6b), the viewing direction 30 is pointing towards the same column of blocks 48, but different to the first example, here the blocks 48 are shifted to a center 56 of the display.

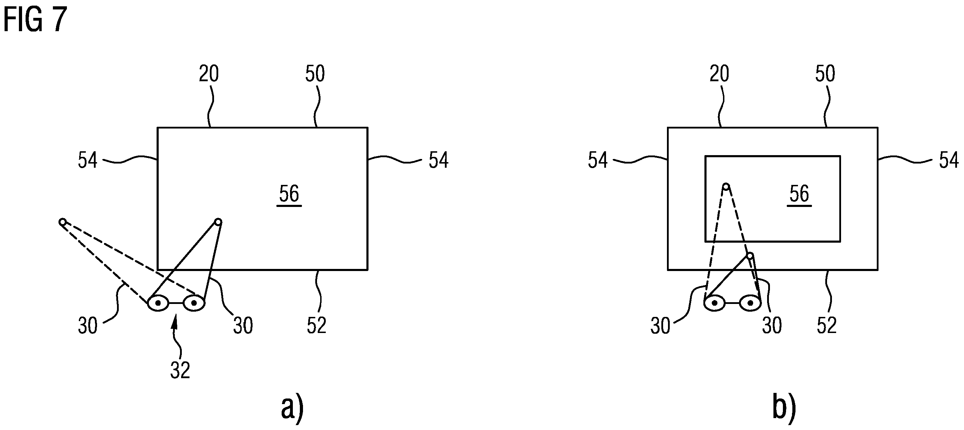

Figs. 7a) and 7b) each show schematically examples of a viewing direction 30 of the driver's 24 eyes 32 of fig. 2.

In order to avoid that the portion 22 is shifted without the will of the driver 24 when the driver 24 is changing its viewing direction 30 due to for example situations happening outside 14 the vehicle 12, the shifting is only performed if, as can be seen in fig. 7a), the viewing direction 30 points towards the display 20 (solid lines). In case the viewing direction 30 points towards another object outside the display 20, indicated by the dashed lines, the shifting of the portion 22 is not performed.

Furthermore, the driver 24 must be enabled to focus different objects on the display 20 without the portion 22 being shifted due to eye 32 movement of the driver 24. In order to avoid this situation, shifting is only performed if the viewing direction 30 points towards a block 48 being located at one of the display's borders 50, 52, 54 (solid lines). In case the viewing direction 30 points towards the center 56 or near the center 56 of the display 20, no shifting is performed, as indicated by the dotted lines in fig. 7b).

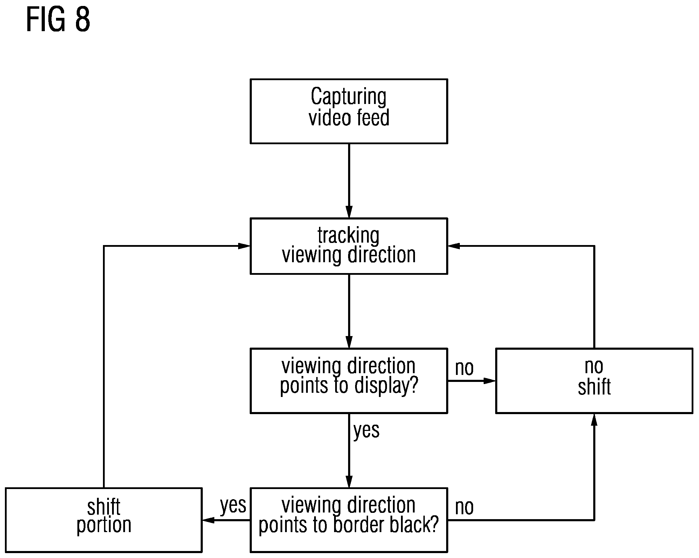

Fig. 8 shows a further, more detailed flow chart with steps of the method for adapting the displayed view of the digital mirror system 16, wherein further requirements are introduced to perform the shifting of the portion 22. In the first step, the video feed 19 is captured by the outside cameras 18 and in the second step the viewing direction 30 of the driver's 24 eyes 32 is tracked. In the third step it is identified via the view adapting unit 36 if the viewing direction 30 of the driver's 24 eyes 32 point towards the display 20. If this is not the case, no shifting of the portion 22 is performed and the tracking of the viewing direction 30 is continued.

In case the viewing direction 30 points to the display 20, it is identified if the viewing direction 30 points towards a block 48 located at one of the border's 50, 52, 54 of the display 20. If this is not the case, no shifting of the portion 22 is performed and the tracking of the viewing direction 30 is continued.

Only in case the viewing direction 30 of the driver's 24 eyes 32 is pointed towards one of the blocks 48 located at the borders 50, 53, 54 of the display, the shifting of the portion 22 is performed according to the driver's 24 eyes 32 viewing direction 30.

In this case, according to the invention, it is required that the driver's 24 eyes 32 point for a predetermined time span to one of the borders 50, 52, 52.

After shifting the portion 22 the tracking of the viewing direction 30 is continued as has already been described with reference to fig. 4.

To sum up the above-described method, the digital mirror system 16 will permanently analyze the video feed from the interior cameras 28 and detect the viewing direction 30. As soon as a movement of the driver's 24 eyes 32 is detected the digital mirror system 16 will display the required portion 22 of the video feed 19.

For example, if the driver 24 moves up his eyes 32, then the displayed image 46 moves also up to another portion 22 of the high-resolution video feed 19. If the driver's eyes 32 move down, for example an upper portion 22 of the video feed 19 is displayed.

The same holds for the driver 24 changing his viewing direction 30 to the lateral borders 54. If the driver's 24 eyes 32 move sideways, the displayed image 46 moves in correlation with this movement due to the eye tracking unit 26, and another portion 22 of the video feed 19 is revealed.

This movement of images 46 has all advantages of a classical mirror while keeping the advantages of the digital mirror system 16. With this improved digital mirror system 16 the driver 24 is provided with more potential viewing angles without the need of taking the hands off the steering wheel.

## Claims

1. Method for adapting a displayed view of a digital mirror system (16) of a vehicle (12), the method comprising the following steps:
- providing a vehicle (12) with a digital mirror system (16) comprising:
- at least one camera (18) to capture a video feed (19) from outside (14) the vehicle (12), the video feed (19) being composed by a sequence (44) of images (46) comprising an image content (34); and
- at least one display (20) displaying at least a portion (22) of the image content (34) of each image (46) in the video feed (19), the display (20) comprising an upper border (50), a lower border (52) and two opposite lateral borders (54);
- providing the vehicle (12) with an eye tracking (26) unit to track a viewing direction (30) of a driver's (24) eyes (32);
- capturing the video feed (19) and displaying one portion (22) of the video feed's (19) image content (34) on the display (20);
- identifying a change of the viewing direction (30) of the driver's (24) eyes (32);
- shifting the portion (22) of the video feed's (19) image content (34) according to the driver's (24) eyes' (32) changed viewing direction (30),
**characterized by** the step that, the portion of the video feed's (19) image content (34) is only shifted if the viewing direction (30) points towards a block at the display's (20) borders (50, 52, 54) for a predefined time span.

2. Method according to claim 1,
**characterized in that** the video feed (19) is composed by a sequence (44) of high-resolution images (46), wherein each high-resolution image (46) is fragmented into a plurality of blocks (48), wherein the displayed portion (22) of the video feed's (19) image content (34) is composed by at least two adjacent blocks (48).

3. Method according to claim 2,
**characterized in that** shifting the portion (22) of the video feed's (19) image content (34) is performed by at least one block (48) located on the display (20) at a first of the display's (20) borders (50, 52, 54) leaving the display (20) and, at the same time, at least one block (48) located outside of the display (20) entering the display (20) at a second of the display's (20) borders (50, 52, 54).

4. Method according to any of the claims 1 to 3,
**characterized in that** the eye tracking unit (26) is provided by an interior camera (28), in particular an interior camera (28) being placed inside the vehicle (12).

5. Method according to any of the claims 1 to 4,
**characterized in that** the portion (22) of the video feed's (19) image content (34) is only shifted if the viewing direction (30) of the driver's (24) eyes (32) points towards the display (20).

6. Method according to any of the claims 2 to 4,
**characterized in that** the portion (22) of the video feed's (19) image content (34) is only shifted if the viewing direction (30) of the driver's (24) eyes (32) points towards a block (48) being located at one of the display's (20) borders (50, 52, 54).

7. Method according to claim 6,
**characterized in that** when shifting the portion (22) of the video feed's (19) image content (34) the block (48) the driver's (24) eyes (32) are pointing towards is leaving the display (20).

8. Method according to claim 6,
**characterized in that** when shifting the portion (22) of the video feed's (19) image content (34) the block (48) the driver's (24) eyes (32) are pointing towards is shifting to a center (56) of the display (20).

9. Method according to any of the claims 1 to 8,
**characterized in that** the captured video feed (19) is compressed, wherein for displaying the at least one portion (22) of the video feed's (19) image content (34) only the portion (22) to be displayed is decompressed.

10. Digital mirror system (16) of a vehicle (12), the digital mirror system (16) designed to execute the method according to any of the claims 1 to 9, the digital mirror system (16) comprising:
- at least one camera (18) to capture a video feed (19) from outside (14) the vehicle (12), the video feed (19) being composed by a sequence (44) of images (46) comprising an image content (34);
- at least one display (20) displaying at least one portion (22) of the image content (34) of each image (46) in the video feed (19), the display (20) comprising an upper border (50), a lower border (52) and two opposite lateral borders (54);
- a view adapting unit (35) to adapt the portion (22) of the video feed's (19) image content (34) displayed on the display (20), the view adapting unit (35) comprising an eye tracking unit (26) to track a viewing direction (30) of the driver's (24) eyes (32), an identifying unit (38) to identify a change of the viewing direction (30) of the driver's (24) eyes (32) and a shifting unit (40) to shift the portion (22) of the video feed's (19) image content (34) according to the driver's (24) eyes' (32) changed viewing direction (30),
**characterized in that**
the portion of the video feed's (19) image content (34) is only shifted if the viewing direction (30) points towards a block at the display's (20) borders (50, 52, 54) for a predefined time span.

## Patentansprüche

1. Verfahren zur Anpassung einer angezeigten Ansicht eines digitalen Spiegelsystems (16) eines Fahrzeugs (12), wobei das Verfahren die folgenden Schritte umfasst:
- Versehen eines Fahrzeugs (12) mit einem digitalen Spiegelsystem (16), das umfasst:
- mindestens eine Kamera (18) zum Aufnehmen eines Videofeeds (19) von außerhalb (14) des Fahrzeugs (12), wobei der Videofeed (19) durch eine Folge (44) von Bildern (46) gebildet wird, die einen Bildinhalt (34) umfassen; und
- mindestens eine Anzeige (20), die zumindest einen Teil (22) des Bildinhalts (34) jedes Bildes (46) im Videofeed (19) anzeigt, wobei die Anzeige (20) einen oberen Rand (50), einen unteren Rand (52) und zwei gegenüberliegende seitliche Ränder (54) umfasst;
- Versehen des Fahrzeugs (12) mit einer Augenverfolgungseinheit (26) zum Verfolgen einer Blickrichtung (30) von Augen (32) eines Fahrers (24);
- Aufnehmen des Videofeeds (19) und Anzeigen eines Teils (22) des Bildinhalts (34) des Videofeeds (19) auf der Anzeige (20);
- Identifizieren einer Änderung der Blickrichtung (30) der Augen (32) des Fahrers (24);
- Verschieben des Teils (22) des Bildinhalts (34) des Videofeeds (19) gemäß der geänderten Blickrichtung (30) der Augen (32) des Fahrers (24),
**gekennzeichnet durch** den Schritt, dass der Teil des Bildinhalts (34) des Videofeeds (19) nur dann verschoben wird, wenn die Blickrichtung (30) für eine vordefinierte Zeitspanne auf einen Block an den Rändern (50, 52, 54) der Anzeige (20) zeigt.

2. Verfahren nach Anspruch 1,
**dadurch gekennzeichnet, dass** der Videofeed (19) durch eine Folge (44) von hochauflösenden Bildern (46) gebildet wird, wobei jedes hochauflösende Bild (46) in eine Mehrzahl von Blöcken (48) fragmentiert ist, wobei der angezeigte Teil (22) des Bildinhalts (34) des Videofeeds (19) durch mindestens zwei benachbarte Blöcke (48) gebildet wird.

3. Verfahren nach Anspruch 2,
**dadurch gekennzeichnet, dass** das Verschieben des Teils (22) des Bildinhalts (34) des Videofeeds (19) durchgeführt wird, indem mindestens ein Block (48), der sich auf der Aneige (20) an einem ersten der Ränder (50, 52, 54) der Anzeige (20) befindet, die Anzeige (20) verlässt, und gleichzeitig mindestens ein Block (48), der sich außerhalb der Anzeige (20) befindet, (20) an einem zweiten der Ränder (50, 52, 54) der Anzeige in die Anzeige (20) eintritt.

4. Verfahren nach einem der Ansprüche 1 bis 3,
**dadurch gekennzeichnet, dass** die Augenverfolgungseinheit (26) durch eine Innenkamera (28), insbesondere eine Innenkamera (28), die innerhalb des Fahrzeugs (12) platziert ist, vorgesehen ist.

5. Verfahren nach einem der Ansprüche 1 bis 4,
**dadurch gekennzeichnet, dass** der Teil (22) des Bildinhalts (34) des Videofeeds (19) nur dann verschoben wird, wenn die Blickrichtung (30) der Augen (32) des Fahrers (24) auf die Anzeige (20) zeigt.

6. Verfahren nach einem der Ansprüche 2 bis 4,
**dadurch gekennzeichnet, dass** der Teil (22) des Bildinhalts (34) des Videofeeds (19) nur dann verschoben wird, wenn die Blickrichtung (30) der Augen (32) des Fahrers (24) auf einen Block (48) zeigt, der sich an einem der Ränder (50, 52, 54) der Anzeige (20) befindet.

7. Verfahren nach Anspruch 6,
**dadurch gekennzeichnet, dass**, wenn der Teil (22) des Bildinhalts (34) des Videofeeds (19) verschoben wird, der Block (48), auf den die Augen (32) des Fahrers (24) zeigen, die Anzeige (20) verlässt.

8. Verfahren nach Anspruch 6,
**dadurch gekennzeichnet, dass**, wenn der Teil (22) des Bildinhalts (34) des Videofeeds (19) verschoben wird, der Block (48), auf den die Augen (32) des Fahrers (24) zeigen, in eine Mitte (56) der Anzeige (20) verschoben wird.

9. Verfahren nach einem der Ansprüche 1 bis 8,
**dadurch gekennzeichnet, dass** der aufgenommene Videofeed (19) komprimiert wird, wobei zum Anzeigen des mindestens einen Teils (22) des Bildinhalts (34) des Videofeeds (19) nur der anzuzeigende Teil (22) dekomprimiert wird.

10. Digitales Spiegelsystem (16) eines Fahrzeugs (12), wobei das digitale Spiegelsystem (16) zum Ausführen des Verfahrens nach einem der Ansprüche 1 bis 9 ausgelegt ist, wobei das digitale Spiegelsystem (16) umfasst:
- mindestens eine Kamera (18) zum Aufnehmen eines Videofeeds (19) von außerhalb (14) des Fahrzeugs (12), wobei der Videofeed (19) durch eine Folge (44) von Bildern (46) gebildet wird, die einen Bildinhalt (34) umfassen; und
- mindestens eine Anzeige (20), die zumindest einen Teil (22) des Bildinhalts (34) jedes Bildes (46) im Videofeed (19) anzeigt, wobei die Anzeige (20) einen oberen Rand (50), einen unteren Rand (52) und zwei gegenüberliegende seitliche Ränder (54) umfasst;
- eine Ansichtsanpassungseinheit (35), die zum Anpassen des Teils (22) des Bildinhalts (34) des Videofeeds (19) ausgelegt ist, der auf der Anzeige (20) angezeigt wird, wobei die Ansichtsanpassungseinheit (35) eine Augenverfolgungseinheit (26) zum Verfolgen einer Blickrichtung (30) der Augen (32) des Fahrers (24), eine Identifizierungseinheit (38) zum Identifizieren einer Änderung der Blickrichtung (30) der Augen (32) des Fahrers (24) und eine Verschiebungseinheit (40) zum Verschieben des Teils (22) des Bildinhalts (34) des Videofeeds (19) gemäß der geänderten Blickrichtung (30) der Augen (32) des Fahrers (24) umfasst,
**dadurch gekennzeichnet, dass**
der Teil des Bildinhalts (34) des Videofeeds (19) nur dann verschoben wird, wenn die Blickrichtung (30) für eine vordefinierte Zeitspanne auf einen Block an den Rändern (50, 52, 54) der Anzeige (20) zeigt.

## Revendications

1. Procédé pour adapter une vue affichée d'un système de miroir numérique (16) d'un véhicule (12), le procédé comprenant les étapes suivantes :
- doter un véhicule (12) d'un système de miroir numérique (16) comprenant :
- au moins une caméra (18) pour capturer un flux vidéo (19) depuis l'extérieur (14) du véhicule (12), le flux vidéo (19) étant composé d'une séquence (44) d'images (46) comprenant un contenu d'image (34) ; et
- au moins un dispositif d'affichage (20) affichant au moins une partie (22) du contenu d'image (34) de chaque image (46) du flux vidéo (19), le dispositif d'affichage (20) comprenant un bord supérieur (50), un bord inférieur (52) et deux bords latéraux opposés (54) ;
- doter le véhicule (12) d'une unité de suivi des yeux (26) pour suivre la direction de vision (30) des yeux (32) du conducteur (24) ;
- capturer le flux vidéo (19) et afficher une partie (22) du contenu d'image (34) du flux vidéo (19) sur le dispositif d'affichage (20) ;
- identifier un changement de direction de vision (30) des yeux (32) du conducteur (24) ;
- décaler la partie (22) du contenu d'image (34) du flux vidéo (19) en fonction du changement de direction de vision (30) des yeux (32) du conducteur (24),
**caractérisé par** l'étape selon laquelle la partie du contenu d'image (34) du flux vidéo (19) n'est décalée que si la direction de vision (30) pointe vers un bloc situé sur les bords (50, 52, 54) du dispositif d'affichage (20) pendant un laps de temps prédéfini.

2. Procédé selon la revendication 1,
**caractérisé en ce que** le flux vidéo (19) est composé d'une séquence (44) d'images à haute résolution (46), dans lequel chaque image à haute résolution (46) est fragmentée en une pluralité de blocs (48), dans lequel la partie affichée (22) du contenu d'image (34) du flux vidéo (19) est composée d'au moins deux blocs adjacents (48).

3. Procédé selon la revendication 2,
**caractérisé en ce que** le décalage de la partie (22) du contenu d'image (34) du flux vidéo (19) est effectué en faisant en sorte qu'au moins un bloc (48) situé sur le dispositif d'affichage (20) sur un premier des bords (50, 52, 54) du dispositif d'affichage (20) quitte le dispositif d'affichage (20) et, en même temps, qu'au moins un bloc (48) situé à l'extérieur du dispositif d'affichage (20) pénétre dans le dispositif d'affichage (20) sur un second des bords (50, 52, 54) du dispositif d'affichage (20).

4. Procédé selon l'une quelconque des revendications 1 à 3,
**caractérisé en ce que** l'unité de suivi des yeux (26) est fournie par une caméra intérieure (28), en particulier une caméra intérieure (28) placée à l'intérieur du véhicule (12).

5. Procédé selon l'une quelconque des revendications 1 à 4,
**caractérisé en ce que** la partie (22) du contenu d'image (34) du flux vidéo (19) n'est décalée que si la direction de vision (30) des yeux (32) du conducteur (24) pointe vers le dispositif d'affichage (20).

6. Procédé selon l'une quelconque des revendications 2 à 4,
**caractérisé en ce que** la partie (22) du contenu d'image (34) du flux vidéo (19) n'est décalée que si la direction de vision (30) des yeux (32) du conducteur (24) pointe vers un bloc (48) situé sur l'un des bords (50, 52, 54) du dispositif d'affichage (20).

7. Procédé selon la revendication 6,
**caractérisé en ce que**, lors du décalage de la partie (22) du contenu d'image (34) du flux vidéo (19), le bloc (48) vers lequel pointent les yeux (32) du conducteur (24) quitte le dispositif d'affichage (20).

8. Procédé selon la revendication 6,
**caractérisé en ce que**, lors du décalage de la partie (22) du contenu d'image (34) du flux vidéo (19), le bloc (48) vers lequel pointent les yeux (32) du conducteur (24) se décale vers un centre (56) du dispositif d'affichage (20).

9. Procédé selon l'une quelconque des revendications 1 à 8,
**caractérisé en ce que** le flux vidéo (19) capturé est compressé, dans lequel, pour afficher au moins une partie (22) du contenu d'image (34) du flux vidéo (19), seule la partie (22) à afficher est décompressée.

10. Système de miroir numérique (16) d'un véhicule (12), le système de miroir numérique (16) étant conçu pour mettre en oeuvre le procédé selon l'une quelconque des revendications 1 à 9, le système de miroir numérique (16) comprenant :
- au moins une caméra (18) pour capturer un flux vidéo (19) depuis l'extérieur (14) du véhicule (12), le flux vidéo (19) étant composé d'une séquence (44) d'images (46) comprenant un contenu d'image (34) ;
- au moins un dispositif d'affichage (20) affichant au moins une partie (22) du contenu d'image (34) de chaque image (46) du flux vidéo (19), le dispositif d'affichage (20) comprenant un bord supérieur (50), un bord inférieur (52) et deux bords latéraux opposés (54) ;
- une unité d'adaptation de vue (35) pour adapter la partie (22) du contenu d'image (34) du flux vidéo (19) affichée sur le dispositif d'affichage (20), l'unité d'adaptation de vue (35) comprenant une unité de suivi des yeux (26) pour suivre la direction de vision (30) des yeux (32) du conducteur (24), une unité d'identification (38) pour identifier un changement de direction de vision (30) des yeux (32) du conducteur (24) et une unité de décalage (40) pour décaler la partie (22) du contenu d'image (34) du flux vidéo (19) en fonction du changement de direction de vision (30) des yeux (32) du conducteur (24),
**caractérisé en ce que** la partie du contenu d'image (34) du flux vidéo (19) n'est décalée que si la direction de vision (30) pointe vers un bloc situé sur les bords (50, 52, 54) du dispositif d'affichage (20) pendant un laps de temps prédéfini.
